# FASCICULE DE BREVET EUROPEEN

(11) **EP 2 782 767 B1**
(45) Date de publication et mention de la délivrance du brevet: **28.02.2018**
(21) Numéro de dépôt: 12794431.2
(22) Date de dépôt: 05.11.2012
(51) Int. Cl.: B60H 1/28, B62D 25/08

(54) **SYSTEME D'ADMISSION D'AIR POUR VEHICULE AUTOMOBILE, COMPRENANT UN SYSTEME DE DRAINAGE AMELIORE**
LUFTANSAUGANLAGE FÜR EIN KRAFTFAHRZEUG MIT EINEM VERBESSERTEN ABFLUSSSYSTEM
AIR-INTAKE SYSTEM FOR A MOTOR VEHICLE, INCLUDING AN IMPROVED DRAINAGE SYSTEM

(30) Priorité: 21.11.2011 FR 1160608
(43) Date de publication de la demande: 01.10.2014
(73) Titulaire: PSA Automobiles SA, 78300 Poissy (FR)
(72) Inventeur: EGGENSCHWILLER, Jacques, F-25490 Dampierre Les Bois (FR); TERKI, Chabane, F-25200 Montbeliard (FR)
(86) Numéro de dépôt international: PCT/FR2012/052544
(87) Numéro de publication internationale: WO 2013/076398

(56) Documents cités:
- FR-A1- 2 601 302
- FR-A1- 2 668 999
- JP-A- 59 023 720

## Description

L'invention a trait à l'admission d'air dans les véhicules automobiles.

Dans un véhicule, l'admission d'air est nécessaire pour l'alimentation en air frais du système de ventilation ou de climatisation de l'habitacle du véhicule. Cette admission s'effectue généralement par des entrées d'air grillagées situées à la jonction entre le capot moteur et le bas du pare-brise.

Le grillage des entrées d'air évite l'introduction dans l'admission d'air des débris les plus fréquents sur les routes (cailloux, feuilles, insectes, etc.). Mais il n'évite pas l'introduction de liquides (notamment l'eau de pluie et le liquide de lave-glace ruisselant du pare-brise), qui doivent par conséquent être drainés pour éviter leur admission dans l'habitacle via le système de ventilation ou de climatisation.

On connaît du document FR 2 654 043 (et de son équivalent britannique GB 2 239 432) un capot-moteur pour un véhicule automobile, qui comprend, sous une ouverture d'entrée d'air, une partie de renfort à section en forme de W, destinée à permettre une division du flux d'air, cependant que l'eau se trouve retenue dans les cuvettes.

Cette solution apparaît satisfaisante tant que le débit d'eau ruisselant au travers de l'ouverture d'entrée d'air demeure faible. En revanche, dès lors que le débit d'eau est élevé, les cuvettes sont rapidement remplies, ce qui produit, d'une part, une obturation des canaux de guidage de l'air et, d'autre part, un écoulement du trop-plein vers un canal d'alimentation de l'installation de chauffage ou de climatisation.

Un premier objectif est, dans un système d'admission d'air, de faciliter le drainage de l'eau de ruissellement (ou d'autres liquides).

Un deuxième objectif est de limiter les risques d'introduction de l'eau de ruissellement dans le système de ventilation ou de climatisation du véhicule.

Un troisième objectif est d'éviter la stagnation de l'eau de ruissellement dans des zones sensibles à la corrosion.

Il est par conséquent proposé, selon un premier aspect, un système d'admission d'air pour un véhicule automobile, qui comprend un auvent intégrant un système de drainage de l'eau ; ce système de drainage comprend au moins deux canaux latéraux, chaque canal latéral s'étendant depuis une extrémité amont, par laquelle le canal latéral communique avec une entrée d'air, jusqu'à une extrémité aval, par laquelle le canal secondaire débouche sur un bord arrière de l'auvent, et chaque canal latéral est conformé en chicane, l'extrémité aval étant décalée transversalement par rapport à l'extrémité amont.

Il en résulte un meilleur drainage des liquides (notamment de l'eau de pluie), et une diminution des risques de pollution de l'air admis dans le système de ventilation ou de climatisation du véhicule.

Diverses caractéristiques supplémentaires peuvent être prévues, seules ou en combinaison :
- l'extrémité aval de chaque canal latéral est décalée transversalement vers l'intérieur par rapport à l'extrémité amont.
- le système de drainage comprend un canal principal qui s'étend transversalement le long d'un bord avant de l'auvent, à l'aplomb de l'entrée d'air, et en ce que le canal principal présente des extrémités latérales par lesquelles il communique avec les canaux latéraux.
- chaque canal latéral présente en section une forme en U, et est délimité par un fond et deux parois en regard.
- chaque canal latéral présente :
   ∘ à son extrémité amont, une section amont de rebroussement ;
   ∘ en aval de la section de rebroussement, une section intermédiaire qui s'étend transversalement ;
   o en aval de la section intermédiaire, un coude formant un angle droit ;
   o en aval du coude, une section aval qui s'étend longitudinalement jusqu'à l'extrémité aval.
- chaque canal latéral s'étend en dévers depuis son extrémité amont jusqu'à son extrémité aval.

Il est proposé, en deuxième lieu, un véhicule équipé d'un système d'admission d'air tel que présenté ci-dessus.

D'autres objets et avantages de l'invention apparaîtront à la lumière de la description d'un mode préféré de réalisation, faite ci-après en référence aux dessins annexés dans lesquels :
- la figure 1 est une vue en perspective illustrant un système d'admission d'air pour un véhicule automobile ;
- la figure 2 est une vue partielle de dessus du système de la figure 1.

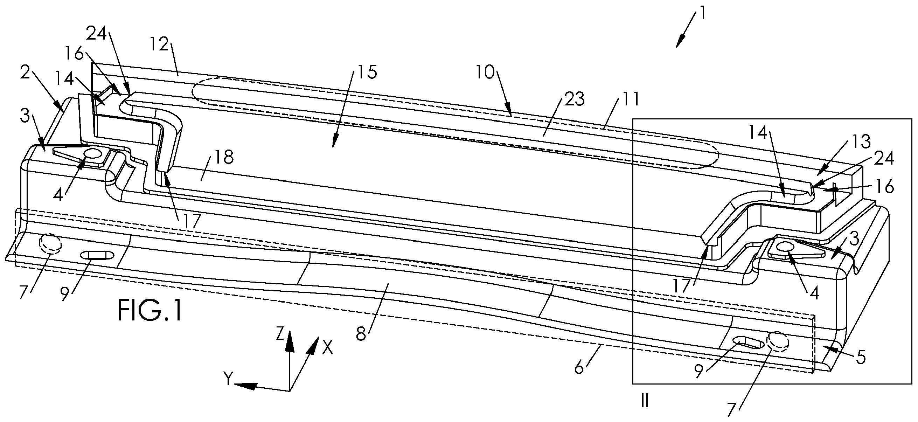

Sur la figure 1 est partiellement représenté un véhicule **1** automobile.

On définit en relation avec le véhicule **1** un repère orthogonal, comprenant un axe X, parallèle au sol et confondu avec une direction longitudinale correspondant à la direction principale de mouvement du véhicule **1,** un axe Y transversal, également parallèle au sol et perpendiculaire à l'axe X, et un axe Z, vertical, perpendiculaire au plan XY.

On a représenté sur la figure 1 certains composants du véhicule, à savoir un élément de caisse sous forme d'une poutre **2** disposée à la base d'une baie (ou pare-brise) du véhicule **1,** à la jonction entre la baie et un compartiment moteur du véhicule **1.**

On voit sur la figure 1 que la poutre **2** définit, au voisinage de chacune de ses extrémités latérales, des logements **3** pour des têtes d'amortisseurs d'un train roulant avant, ces logements étant obturés par des coupelles **4** métalliques formant cache-boulon.

La poutre **2** définit, vers l'arrière, un renfoncement **5** formant gouttière, qui s'étend transversalement sous et le long d'une traverse **6** inférieure de baie du véhicule. On a représenté en pointillés cette traverse **6** qui, comme illustré sur la figure 1, est percée, au voisinage de chacune de ses extrémités latérales, de fenêtres **7** pour l'admission d'air vers un circuit de ventilation, de chauffage ou de climatisation du véhicule **1.** On voit que ces fenêtres **7** sont surélevées par rapport au fond **8** de la gouttière **5.**

Au voisinage de chacune des extrémités latérales, le fond **8** de la gouttière **5** est percé d'une ouverture **9** par laquelle peuvent s'écouler les liquides, pour être évacués vers l'extérieur du véhicule **1.**

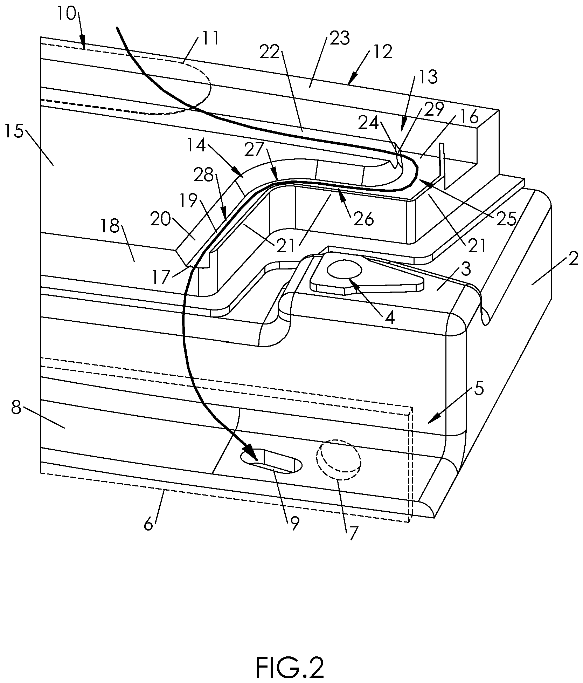

Comme cela est visible sur les figures 1 et 2, les ouvertures **9** sont décalées transversalement vers l'intérieur (c'est-à-dire vers un plan médian XZ), par rapport aux fenêtres **7.**

Le véhicule **1** comprend un système **10** d'admission d'air conformé pour canaliser vers les fenêtres **7** l'air admis par une entrée **11** d'air ménagée au travers du capot du véhicule, et dont les bords sont représentés en pointillés sur la figure 1.

Le système **10** d'admission d'air comprend un auvent **12** intégrant un système **13** de drainage des liquides, pour éviter notamment que l'eau de pluie ou tout autre liquide (par exemple du liquide lave-glace) s'écoulant au travers de l'entrée **11** d'air n'atteigne les fenêtres **7** et ne pollue ainsi l'air pulsé dans l'habitacle du véhicule **1** via son système de ventilation, de chauffage ou de climatisation.

A cet effet, le système **13** de drainage comprend au moins deux canaux **14** latéraux formés dans l'auvent **12.** Plus précisément, chaque canal **14** est creusé dans une face **15** supérieure de l'auvent, et s'étend depuis une extrémité **16** amont, par laquelle le canal **14** latéral communique avec l'entrée **11** d'air, jusqu'à une extrémité **17** aval, par laquelle le canal **14** latéral débouche sur un bord **18** arrière de l'auvent **12.**

Chaque canal **14** latéral présente en section une forme en U, et est délimité par un fond **19,** qui s'étend sensiblement parallèlement au plan XY (tout en étant légèrement incliné vers l'arrière, pour faciliter l'écoulement des liquides) et deux parois **20, 21** en regard.

Selon un mode de réalisation préféré, illustré sur les figures, un canal **22** principal est creusé dans la face **15** supérieure l'auvent **12.** Ce canal **22** principal s'étend transversalement le long d'un bord **23** avant de l'auvent **12,** à l'aplomb de l'entrée **11** d'air.

Le canal **22** principal présente des extrémités **24** latérales par lesquelles il communique avec les canaux **14** latéraux, à leurs extrémités **16** amont.

Le canal **22** principal est de préférence bombé et s'étend en dévers depuis une zone centrale vers chacune de ses extrémités **24** latérales, de sorte à favoriser l'écoulement transversal des liquides vers chaque canal **14** latéral.

Comme on peut le voir sur les figures, chaque canal **14** latéral est conformé en chicane ou en crosse, l'extrémité **17** aval étant décalée transversalement par rapport à l'extrémité **16** avant.

Plus précisément, dans le mode de réalisation illustré, l'extrémité **17** aval de chaque canal **14** latéral est décalée transversalement vers l'intérieur (c'est-à-dire vers un plan médian XZ de l'auvent **12**) par rapport à l'extrémité **16** amont.

De la sorte, chaque canal **14** contourne les logements **3** des têtes d'amortisseurs, ce qui met celles-ci (et les coupelles **4** qui les surplombent) à l'abri des liquides - notamment de l'eau de pluie - et les préserve ainsi de la corrosion.

Ainsi, chaque canal **14** latéral présente :
- à son extrémité **16** amont, à sa jonction avec le canal **22** principal, une section **25** amont de rebroussement, formant une épingle à **180°** ;
- en aval de la section **25** de rebroussement, une section **26** intermédiaire qui s'étend transversalement, parallèlement au canal **22** principal et en arrière de celui-ci ;
- en aval de la section **26** intermédiaire, un coude **27** formant un angle droit ;
- en aval du coude **27,** une section **28** aval qui s'étend longitudinalement jusqu'à l'extrémité **17** aval.

Comme on peut le voir, le canal **22** principal s'étend en surplomb des canaux **14** latéraux, de sorte qu'une marche **29** est formée aux extrémités **24** latérales du canal **22** principal, à la jonction avec chaque canal **14** latéral.

Il en résulte une accélération ponctuelle du liquide, ce qui favorise son écoulement dans le canal **14** latéral.

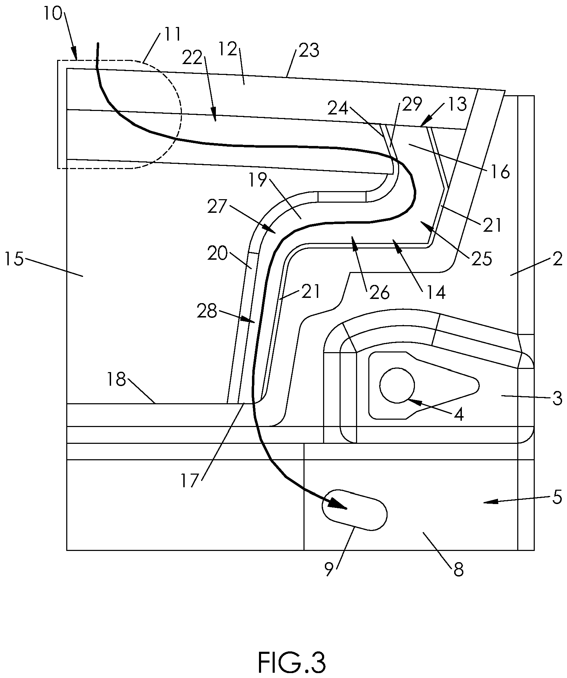

On a tracé sur les figures 2 et 3, en trait noir épais, le trajet de l'écoulement des liquides depuis l'entrée **11** d'air jusqu'aux ouvertures **9** ménagées dans le fond **8** de la gouttière **5.**

On voit que le liquide admis par l'entrée **11** d'air s'écoule d'abord transversalement de l'intérieur vers l'extérieur dans le canal **22** principal, puis transite par le canal **14** latéral où il est accéléré, avant d'être évacué vers l'arrière par l'extrémité **17** aval, depuis laquelle il se déverse dans la gouttière **5.**

Une fois dans la gouttière **5,** le liquide s'écoule alors par les ouvertures **9** pour être évacué du véhicule **1** par un circuit d'évacuation sous-jacent.

Compte tenu du décalage transversal (en l'espèce vers l'intérieur) des extrémités **17** aval des canaux **14** latéraux, le liquide ne peut atteindre les fenêtres **7,** qui sont en effet situées aux extrémités latérales de la traverse **6,** derrière les logements **3** des têtes d'amortisseurs.

Par ailleurs, une fois dans la gouttière, le liquide ne peut plus atteindre les fenêtres **7,** son niveau étant situé sous celles-ci.

En outre, compte tenu de la rectitude de la section **28** aval des canaux **14** latéraux, le flux de liquide qui s'écoule par l'extrémité **17** aval est laminaire ou quasi-laminaire (c'est-à-dire que le flux est sensiblement dépourvu de tourbillons), de sorte que les éclaboussures et les déviations du flux sont minimisées. Il en résulte un écoulement relativement aisé des liquides vers les ouvertures **9,** sans risque d'engorgement.

Comme cela est illustré sur les figures 1 et 2, le fond **8** de la gouttière **5** peut être bombé en étant en dévers depuis une zone centrale vers les extrémités latérales, ce qui favorise l'écoulement des liquides vers les ouvertures **9.**

## Revendications

1. Système (**10**) d'admission d'air pour un véhicule (**1**) automobile, qui comprend un auvent (**12**) intégrant un système (**13**) de drainage de l'eau, **caractérisé en ce que** le système (**13**) de drainage comprend au moins deux canaux (**14**) latéraux, chaque canal (**14**) latéral s'étendant depuis une extrémité (**16**) amont, par laquelle le canal (**14**) latéral communique avec une entrée (**11**) d'air, jusqu'à une extrémité (**17**) aval, par laquelle le canal (**14**) secondaire débouche sur un bord (**18**) arrière de l'auvent (**12**), et **en ce que** chaque canal (**14**) latéral est conformé en chicane, l'extrémité (**17**) aval étant décalée transversalement par rapport à l'extrémité (**16**) amont.

2. Système (**10**) d'admission d'air selon la revendication **1**, **caractérisé en ce que** l'extrémité (**17**) aval de chaque canal (**14**) latéral est décalée transversalement vers l'intérieur par rapport à l'extrémité (**16**) amont.

3. Système (**10**) d'admission d'air selon la revendication **1** ou la revendication **2**, caractérisé en que le système (**13**) de drainage comprend un canal (**22**) principal qui s'étend transversalement le long d'un bord (**23**) avant de l'auvent (**12**), à l'aplomb de l'entrée (**11**) d'air, et en ce que le canal (**22**) principal présente des extrémités (**24**) latérales par lesquelles il communique avec les canaux (**14**) latéraux.

4. Système (**10**) d'admission d'air selon l'une des revendications précédentes, **caractérisé en ce que** chaque canal (**14**) latéral présente en section une forme en U, et est délimité par un fond (**19**) et deux parois (**20, 21**) en regard.

5. Système (**10**) d'admission d'air selon l'une des revendications précédentes, **caractérisé en ce que** chaque canal (**14**) latéral présente :
- à son extrémité (**16**) amont, une section (**25**) amont de rebroussement ;
- en aval de la section (**25**) de rebroussement, une section (**26**) intermédiaire qui s'étend transversalement ;
- en aval de la section (**26**) intermédiaire, un coude (**27**) formant un angle droit ;
- en aval du coude (**27**), une section (**28**) aval qui s'étend longitudinalement jusqu'à l'extrémité (**17**) aval.

6. Système (**10**) d'admission d'air selon l'une des revendications précédentes, **caractérisé en ce que** chaque canal (**14**) latéral s'étend en dévers depuis son extrémité (**16**) amont jusqu'à son extrémité (**17**) aval.

7. Véhicule (**1**) équipé d'un système (**10**) d'admission d'air selon l'une des revendications précédentes.

## Patentansprüche

1. Luftansauganlage (10) für ein Kraftfahrzeug (1), das ein Windlaufquerteil (12) umfasst, das ein Abflusssystem (13) des Wassers enthält, **dadurch gekennzeichnet, dass** das Abflusssystem (13) mindestens zwei seitliche Kanäle umfasst, wobei sich jeder seitliche Kanal (14) von einem stromaufwärtigen Ende (16), durch das der seitliche Kanal (14) mit einem Lufteinlass (11) in Kommunikation steht, bis zu einem stromabwärtigen Ende (17), durch das der Sekundärkanal (14) auf einem hinteren Rand (18) des Windlaufquerteils mündet, erstreckt, und dass jeder seitliche Kanal (14) als eine Schikane ausgebildet ist, wobei das stromabwärtige Ende (17) in Bezug auf das stromaufwärtige Ende (16) quer versetzt ist.

2. Luftansauganlage (10) nach Anspruch 1, **dadurch gekennzeichnet, dass** das stromabwärtige Ende (17) jedes seitlichen Kanals (14) zum Inneren in Bezug auf das stromaufwärtige Ende (16) quer versetzt ist.

3. Luftansauganlage (10) nach Anspruch 1 oder Anspruch 2, **dadurch gekennzeichnet, dass** das Ablasssystem (13) einen Hauptkanal (22) umfasst, der sich quer entlang eines vorderen Rands (23) des Windlaufquerteils (12) in der Senkrechten zu dem Lufteinlass (11) erstreckt, und dass der Hauptkanal (22) seitliche Enden (24) aufweist, durch die er mit den seitlichen Kanälen (14) in Kommunikation steht.

4. Luftansauganlage (10) nach einem der vorhergehenden Ansprüche, **dadurch gekennzeichnet, dass** jeder seitliche Kanal (14) im Querschnitt eine U-Form aufweist und von einem Grund (19) und zwei einander gegenüberliegenden Wänden (20, 21) abgegrenzt ist.

5. Luftansauganlage (10) nach einem der vorhergehenden Ansprüche, **dadurch gekennzeichnet, dass** jeder seitliche Kanal (14) Folgendes aufweist:
- an seinem stromaufwärtigen Ende (16) einen Umkehrabschnitt (25);
- stromabwärts des Umkehrabschnitts (25) einen Zwischenabschnitt (26), der sich quer erstreckt;
- stromabwärts des Zwischenabschnitts (26) einen Winkel (27) der einen rechten Winkel bildet;
- stromabwärts des Winkels (27) einen stromabwärtigen Abschnitt (28), der sich längs bis zu dem stromabwärtigen Ende (17) erstreckt.

6. Luftansauganlage (10) nach einem der vorhergehenden Ansprüche, **dadurch gekennzeichnet, dass** sich jeder seitliche Kanal (14) in Schräglage ausgehend von seinem stromaufwärtigen Ende (16) bis zu seinem stromabwärtigen (17) Ende erstreckt.

7. Fahrzeug (1), das mit einer Luftansauganlage (10) nach einem der vorhergehenden Ansprüche ausgestattet ist.

## Claims

1. An air-intake system (10) for a motor vehicle (1), which includes a cowl (12) integrating a water-drainage system (13), **characterized in that** the drainage system (13) includes at least two lateral channels (14), each lateral channel (14) extending from an upstream end (16), through which the lateral channel (14) communicates with an air inlet (11), to a downstream end (17), through which the secondary channel (14) leads onto a rear edge (18) of the cowl (12), and **in that** each lateral channel (14) is shaped as a baffle, the downstream end (17) being transversely offset with respect to the upstream end (16) .

2. The air-intake system (10) according to Claim 1, **characterized in that** the downstream end (17) of each lateral channel (14) is transversely offset towards the interior with respect to the upstream end (16).

3. The air-intake system (10) according to Claim 1 or Claim 2, **characterized in that** the drainage system (13) includes a main channel (22) which extends transversely along a front edge (23) of the cowl (12), perpendicularly to the air inlet (11), and **in that** the main channel (22) has lateral ends (24) through which it communicates with the lateral channels (14).

4. The air-intake system (10) according to one of the preceding claims, **characterized in that** each lateral channel (14) has a U-shape in section, and is delimited by a base (19) and two facing walls (20, 21) .

5. The air-intake system (10) according to one of the preceding claims, **characterized in that** each lateral channel (14) has:
- at its upstream end (16), an upstream reversal section (25);
- downstream of the reversal section (25), an intermediate section (26) which extends transversely;
- downstream of the intermediate section (26), a bend (27) forming a right-angle;
- downstream of the bend (27), a downstream section (28) which extends longitudinally up to the downstream end (17).

6. The air-intake system (10) according to one of the preceding claims, **characterized in that** each lateral channel (14) extends in a sloping manner from its upstream end (16) to its downstream end (17).

7. A vehicle (1) equipped with an air-intake system (10) according to one of the preceding claims.
